(19) Europäisches Patentamt
European Patent Office
Office européen des brevets

(11) **EP 4 541 781 B1**

(12) **EUROPEAN PATENT SPECIFICATION**

(45) Date of publication and mention
of the grant of the patent:
**01.04.2026 Bulletin 2026/14**

(21) Application number: 23204831.4

(22) Date of filing: **20.10.2023**

(51) International Patent Classification (IPC):
*C04B 35/52* (2006.01)    *C04B 35/626* (2006.01)
*C04B 35/634* (2006.01)    *C04B 35/645* (2006.01)
*B23B 27/14* (2006.01)    *C22C 26/00* (2006.01)

(52) Cooperative Patent Classification (CPC):
(C-Sets available)
**C04B 35/52; C04B 35/62615; C04B 35/6263;
C04B 35/6264; C04B 35/62655; C04B 35/62665;
C04B 35/62675; C04B 35/6268; C04B 35/63492;
C04B 35/645; C22C 26/00;** C04B 2235/402;
C04B 2235/405; C04B 2235/427; C04B 2235/5436;
(Cont.)

(54) **A METHOD OF MANUFACTURING A LARGE POLYCRYSTALLINE COMPOSITE BLANK WITH A DIAMOND MATRIX (PCDM)**

VERFAHREN ZUR HERSTELLUNG EINES GROSSEN POLYKRISTALLINEN VERBUNDROHLINGS MIT DIAMANTMATRIX (PCDM)

PROCÉDÉ DE FABRICATION D'UNE GRANDE ÉBAUCHE COMPOSITE POLYCRISTALLINE À MATRICE DE DIAMANT (PCDM)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**23.04.2025 Bulletin 2025/17**

(73) Proprietor: **Quantum Crystals Management L.L.C
Dubai (AE)**

(72) Inventors:
• **TKATCHENKO, Valeri
DUBAI (AE)**
• **GROMOVS, Aleksejs
LV-1010 Riga (LV)**

(74) Representative: **Vitina, Maruta et al
Agency Tria Robit
Vilandes iela 5-2
1010 Riga (LV)**

(56) References cited:
**GB-A- 2 607 425    US-A1- 2019 061 004**

(52) Cooperative Patent Classification (CPC): (Cont.)
C04B 2235/5445; C04B 2235/5454;
C04B 2235/5472; C04B 2235/94; C04B 2235/95

C-Sets
B22F 2998/10, B22F 3/02, B22F 3/14

**Description**

The invention relates to the field of sintering superhard materials based on diamond under high pressure and high-temperature conditions (HPHT method), specifically, to the sintering of composite materials based on polycrystalline diamond from a homogeneous, specially prepared mixture of diamond powders with a binder material.

Cutting elements of drill bits, specifically polycrystalline diamond compact (PDC) cutting elements, as well as blanks for inserts with diamond tips for mechanical processing, have a working layer made of polycrystalline diamond (PCD). Polycrystalline diamonds can be obtained through sintering diamond powders in the presence of a metal catalyst (cobalt, iron, nickel, or their alloys and mixtures), which possesses catalytic activity for the graphite-to-diamond phase transition. In most cases, the catalyst penetrates the diamond layer during synthesis by infiltrating from the substrate on which the diamond powders are located and remains in the synthesized material unless deliberately removed. This method is well known but has several drawbacks, the main drawback is the uneven distribution of cobalt (or another catalyst) inside the sintered blank, which leads to internal stresses and thermal instability of the resulting material. Furthermore, the polycrystalline diamond layer has a limited thickness, usually no more than 3 mm, which also varies from the center to the periphery of the sintered blank. In addition to infiltration, a method of sintering the blank from a preliminarily prepared mixture of diamond powder with a metallic binder/catalyst is known, which typically acts as an activator for the graphite-to-diamond phase transition. In both cases, the formation of chemical bonds between diamonds during the synthesis of the blank is a mandatory requirement to achieve high physical and mechanical properties of the resulting material. Moreover, the transformation of the binder/catalyst into stronger compounds after the synthesis is highly desirable. These compounds ensure the formation of a composite material with a diamond matrix.

A method for obtaining polycrystalline diamond blank is known [US2010/0285335A1], in which diamond powder with an average particle size of 1 to 50 microns, in an amount of 80-95% by weight, is either vanadium-coated using the sol-gel method or mixed with pure vanadium or vanadium carbide with a comparable or finer size than the size of the diamond grains. The introduction of vanadium or vanadium carbide additive into the diamond layer by infiltration from an external source during the HPHT synthesis cycle is possible. This external source could be a layer of powder introduced between a cemented carbide substrate and the diamond layer. The binder/catalyst source is typically a WC-Co substrate or cobalt powder added to the diamond and vanadium mixture. However, this method has all the drawbacks inherent in the method of infiltration and sintering of blanks on a substrate: uneven distribution of the metallic binder/catalyst, and limited thickness of the resulting polycrystalline diamond layer.

The closest to the proposed invention is the method for producing polycrystalline diamond [US 2018/0185987A], in which nanoscale diamond powders (20-100 nm), previously coated with fluorine, or diamond powders of two fractions with particle size of 20 to 200 nm and of 1 to 5 $\mu$m, in an amount of 80% to 99.5% of the total mass, are mixed in a dry form or in a protective solvent medium such as dry hexane, cyclohexane, heptane, benzene, toluene, or their combinations, with a metal selected from the group consisting of aluminum, copper, silver, indium, zinc, lead, lithium, sodium, potassium, rubidium, cesium, magnesium, calcium, strontium, or barium. The solvent is subsequently removed by evaporation to obtain a dry mixture, from which a green blank is formed using extrusion, pressing, etc. This green blank must be subjected to HPHT conditions at a temperature of 900-1500 degrees Celsius and a pressure of 5.5-7.5 GPa, resulting in the formation of a polycrystalline diamond. Typically, sintering is performed on a substrate made of WC-Co cemented carbide, but the green blank can be sintered also without any substrate. US 2019/061004 A1 discloses a method of manufacturing a PDC cutting element.

However, the known method does not allow for the production of large-sized blanks due to the low activity of the raw powders to be sintered, which consequently requires the use of significantly higher pressure-temperature (P-T) parameters when increasing the blank sizes.

The technical problem to be solved by the present invention is to create a possibility to produce a large-sized blank made of a polycrystalline composite with a diamond matrix (PCDM) that has homogeneous composition throughout its entire volume, without any free metal catalyst within its structure. The invention is defined in the appended claims 1-7.

In a method for producing a large-sized blank made of a PCDM, comprising:

- mixing diamond powder of a first fraction with particle size greater than 1 $\mu$m, and diamond powder of a second fraction with particle size less than $\mu$m with aluminum powder and cobalt powder in a liquid inert hydrocarbon-based dispersion medium;

  - evaporating the liquid inert dispersion medium;

- forming a green blank from the obtained dry mixture by pressing;
- sintering the green blank using High-Pressure High-Temperature (HPHT) method, according to the present invention,
- a surface of the diamond powder of the first fraction with particle sizes selected from the range of 5 to 40 $\mu$m, and a surface of the diamond powder of the second fraction with particle sizes of 0.05 to 1 $\mu$m previously is activated for 1 to 4 hours with a low-temperature $CCl_2F_2/O_2$ plasma at a power of 50 to 100W;

- mixing the diamond powder of the first fraction and the diamond powder of the second fraction in weight ratios of 3:1 to 9:1 is carried out for 1 to 3 hours in a bead mill in the hydrocarbon-based liquid inert dispersion medium, with the addition of the aluminum powder with particle sizes of 0.1 to 3 $\mu$m in amount of 2 to 5% by weight of the mixture of the diamond powders, and the cobalt powder with particle sizes of 0.1 to 10 $\mu$m in amount of 1 to 15% by weight of the mixture of the diamond powders, as activators for subsequent sintering and a plasticizer in amount of 0.5 to 1% by weight of the mixture of the diamond powders;
- evaporating of the liquid inert dispersion medium is carried out in a rotary evaporator at a rotational speed of 5 to 15 revolutions per minute and a temperature of 70 to 80°C;
- forming the green blank from the obtained dry mixture is performed using an uniaxial press at a pressure of 300 to 700 MPa;
- sintering the green blank by the HPHT method is carried out to achieve the formation of the large-sized blank made of PCDM (PCDM blank) which has a homogeneous composition throughout its entire volume.

A distinctive feature of the proposed method is the activation of the surface of the diamond powders using the low-temperature $CCl_2F_2/O_2$ plasma. This eliminates non-diamond carbon films and other contaminants from the diamond surface and improves the interaction between the diamond powders and the sintering activators thus facilitating the formation of a diamond matrix, which determines physical and mechanical properties of the resulting PCDM blank.

Mixing the diamond powders of two fractions is a well-known technique. This makes it possible to obtain a denser packing of diamond particles during the formation of the green blank and the HPHT synthesis.

To maintain the activity of the powders and prevent their oxidation and contamination upon interaction with the ambient air, the mixing process is conducted within a protective environment. The mixing parameters are chosen in a manner that ensures the most uniform distribution of all ingredients in the resulting mixture. The temporary binder-plasticizer creates a protective passivating film on the diamond powders within the obtained dry mixture, preventing the disruption of uniform distribution of the ingredients during long-term storage.

Activation of the surface of diamond powders using the low-temperature $CCl_2F_2/O_2$ plasma can be carried out under gentle conditions at a power of 50 to 60W for 3 to 4 hours in a rotating container.

Before activating the surface of the diamond powders by the low-temperature $CCl_2F_2/O_2$ plasma, the diamond powders are preferably pre-blown with plasma-forming gases Ar, $N_2$, $H_2$, or mixtures thereof, for example, Ar/$H_2$ up to 35% volume $H_2$, can be conducted. Such treatment intensifies the cleaning process, removing excess materials through physical means.

Mixing the ingredients is preferably carried out in a bead mill with 2 to 3 mm diameter balls and a tumbler both made of tungsten carbide (WC-Co cemented carbide).

Mixing the ingredients is preferably carried out in a mixture of hexane and pentane at a weight ratio of the mixture of hexane and pentane to the weight of the mixture of the diamond powders of 5:1 to 2:1.

When mixing the diamond powder of the first fraction and the diamond powder of the second fraction, paraffin or beeswax can be used as a plasticizer.

Sintering of the green blank preferably is carried out using the HPHT method at a pressure of uniaxial compression range of 5.0 to 9.0 GPa in a temperature range of 500°C to 1700°C for a duration of 10 to 30 minutes. The sintering process starts within the thermodynamic stability region of graphite and ends within the thermodynamic stability region of diamond, leading to the formation of a dense (sintered) polycrystalline composite material with a robust diamond matrix (PCDM). This matrix includes diamond-diamond bonds, AlCo intermetallics and $AlCo_3C$ ternary carbides. The presence of AlCo and $AlCo_3C$ does not have a negative effect on the physical and mechanical properties of the large-sized polycrystalline composite blank.

A large-sized blank made of polycrystalline composite with a diamond matrix, which is not claimed, obtained by the proposed method, has homogeneous composition throughout the entire volume, a diameter of 20 to 50 mm and a height of 10 to 25 mm.

The invention is explained in more detail below with reference to the accompanying drawings, wherein:

in Fig. 1 the large-sized PCDM blank with designated material fracture analysis areas is shown;
in Fig.2 a XRD diffraction pattern of the PCDM obtained in Example 1 is shown;

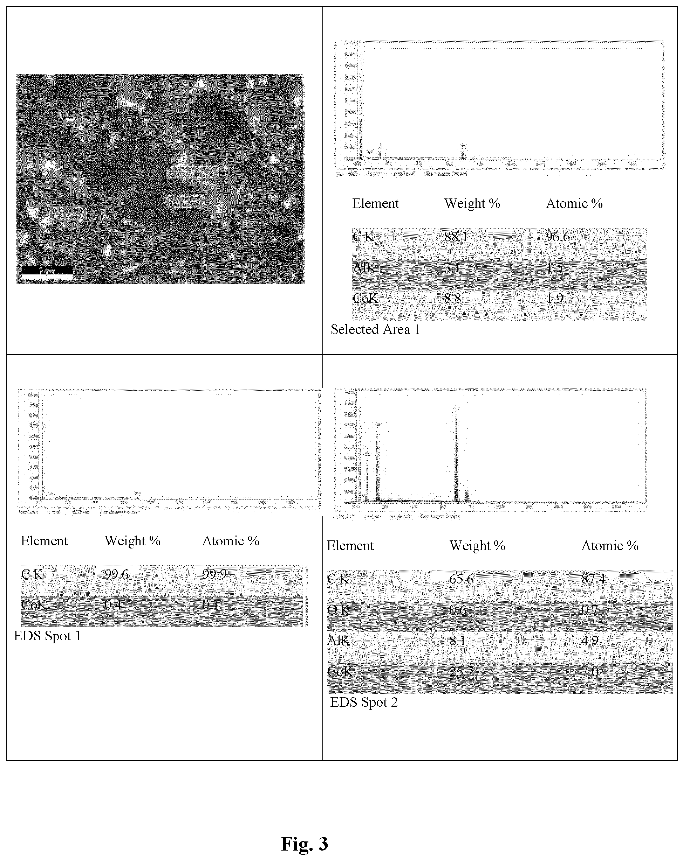

in Fig.3 the detailed results of elemental analysis in Area 3 are shown.

The proposed method of manufacturing a large polycrystalline composite blank with a diamond matrix (PCDM) is illustrated by examples of specific implementation.

Example 1

12.1 grams of diamond powder of the first fraction with particle size of 8-12 $\mu$m and 3.1 grams of diamond powder of the second fraction with particle size of 0.5-1 $\mu$m, both produced by Huang He Whirlwind, China, were activated with low-temperature $CCl_2F_2/O_2$ plasma at a pressure of 200 Pa for 2 hours, at a radiation power of 80W, with excitation at a frequency of 13.56 MHz using an Oxford Instruments Plasma Technology PlasmaPro®NGP80-based setup. The activated diamond powders were placed in a bead mill (Dispermill Discovery 100) with WC-Co balls, 2-3 mm in diameter. To this mixture, 0.5 grams of aluminum powder with particle sizes around 800 nm, 1.5 grams of cobalt powder with sizes up to 5 $\mu$m, both produced by HONGWU INTERNATIONAL GROUP LTD, China, and 0.11 grams of beeswax were added. Mixing of these ingredients was carried out in a solution of hexane (45 grams) and pentane (20 grams) for 2 hours. The resulting mixture was placed in a Buchi Rotavapor-r-300 rotary evaporator, where at a temperature of 70°C and a rotational speed of 15 rpm, liquid components were removed for 3 hours. The obtained dry mixture was pressed into a green blank with a diameter of 25.4 mm and a height of 14.7 mm using a hydraulic press (HHY-315TX) at a pressure of 400 MPa. The resulting green blank was placed in a pyrophyllite container for the synthesis of diamond powder, also produced by Huang He Whirlwind, China. This container was then placed in a cubic press (CX700, Guilin, China) and sintered by the HPHT method for 15 minutes at a pressure of 6.5 GPa and a temperature of 1550°C. A large-sized PCDM blank having a diameter of 25 mm and a height of 12.5 mm, with a density of 3.61 grams/cm³ was obtained.

For testing purposes, a plate of RNMN0903 (ISO1832) was cut from the PCDM blank using an electrical discharge machine (EDM) DK 77 produced in China. The plate was then tested by turning a WC-Co8 blank for 10 minutes under the following conditions:

$$\text{cutting speed (V)} = 80 \text{ m/min;}$$

$$\text{depth of cut (Ap)} = 0.5 \text{ mm;}$$

$$\text{feed rate (f)} = 0.2 \text{ mm/rev.}$$

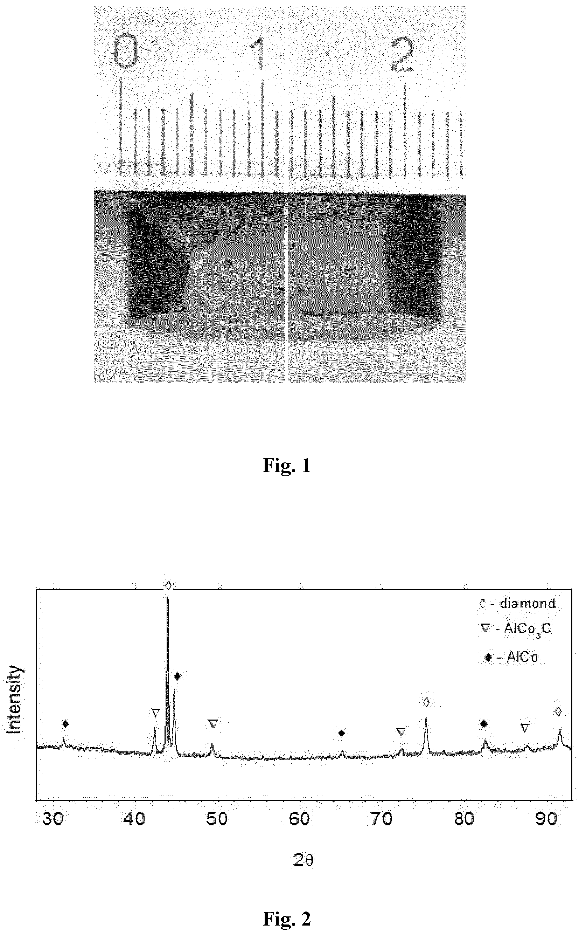

In Fig. 1 the large-sized PCDM blank with designated material fracture analysis areas is shown. The quality was assessed by measuring the hard alloy material weight loss (in grams) in relation to the size of the wear spot (in square millimeters). The wear resistance coefficient ($K_{wr}$) is calculated as $K_{wr} = m/S$, where m is the weight loss of the material and S is the size of the wear spot. For this example, $K_{wr}$ = 105.5 g/mm².

The comparative quality of PCDM was assessed as excellent when $K_{wr} \geq 90$, good when $K_{wr}$ was between 60 and 90 and poor when $K_{wr}$ was less than 60.

The results of the elemental analysis are provided in Table 1.

Table 1

| Elemental composition of areas on the PCDM fracture (in wt %) | | | | | | | |
|---|---|---|---|---|---|---|---|
| Element | Element Analysis Location Point | | | | | | |
| | 1 | 2 | 3 | 4 | 5 | 6 | 7 |
| C | 87.8 | 87.9 | 88.2 | 87.6 | 88.0 | 87.7 | 88.1 |
| Co | 9.3 | 8.7 | 8.8 | 9.2 | 9.0 | 9.1 | 8.8 |
| Al | 2.9 | 3.2 | 3.0 | 3.1 | 2.8 | 3.2 | 3.1 |
| O | - | 0.2 | - | 0.1 | 0.2 | - | - |

Thus, the elemental analysis demonstrates that the element content at each point of the large blank is consistently close to a constant value. X-ray phase analysis of the sintered blank also revealed the absence of free metals, with the binding phase consisting entirely of the intermetallic compound AlCo and carbide $AlCo_3C$.

Example 2

The method was implemented similarly to Example 1, with the following differences.

The same ingredients as in Example 1 were used in the following proportions:

the diamond powder of the first fraction - 69.3 g;
the diamond powder of the second fraction - 18.1 g;
the cobalt powder - 8.9 g;
the aluminum powder - 3.0 g;
beeswax - 0.6 g.

Before activating the surface of the diamond powders by the low-temperature $CCl_2F_2/O_2$ plasma, they were pre-blown with Ar gas.

Plasma treatment was carried out similarly to Example 1 but at 100W for 1 hour. Mixing the ingredients was performed in a mixture of hexane (210 grams) and pentane (90 grams) for 3 hours. Evaporating was carried out similarly to Example1 but for 4 hours. Sintering the green blank was performed for 20 minutes, using parameters similar to Example 1, until the large-sized PCDM blank having a diameter of 42 mm, a height of 20 mm and a density of 3.58 grams/cm$^3$ was obtained. The wear resistance coefficient for this example, $K_{wr}$, was 95.4, and the phase composition of the binder included AlCo and $AlCo_3C$.

Example 3.

The method was implemented similarly to Example 2, but plasma treatment was performed at 60W for 4 hours. The wear resistance coefficient for this example, $K_{wr}$, was 87.2, and the phase composition of the binder included AlCo and $AlCo_3C$.

Example 4.

The method was implemented similarly to Example 1, with the following differences.
The same ingredients as in Example 1 were used in the following ratios:

- the diamond powder of the first fraction - 80.0 g;
- the diamond powder of the second fraction - 11.5 g;
- the cobalt powder - 4.6 g;
- the aluminum powder - 2.3 g;
- beeswax - 0.5 g.

Plasma treatment was performed similarly to step 1 but at 100W power. Mixing of the components was carried out in the mixture of hexane (210 grams) and pentane (90 grams) environment for 3 hours. Evaporating was performed similarly to Example 1 but for 4 hours. Sintering was conducted for 20 minutes, using settings similarly to Example 1, until obtaining a large-sized PCDM blank having a diameter of 42 mm and a height of 20 mm. The density of the obtained blank was 3.49 grams/cm$^3$. The wear resistance coefficient for this example, $K_{wr}$, was 72.2, and the phase composition of the binder was AlCo.

Example 5.

7.5 grams of diamond powder with particle size of 5 to 7 $\mu$m and 2.5 grams of diamond powder with particle size of 0.05 to 0.1 $\mu$m were activated by a low-temperature plasma as described in Example 1. To the mixture of diamond powders, 0.4 grams of aluminum powder with an average particle size of about 0.8 $\mu$m and 0.9 grams of cobalt powder with particle size of 0.1 to 1.0 $\mu$m and 0.06 grams of paraffin were added. The powders were mixed and molded similarly to Example 1. The obtained green blank was sintered for 10 minutes at a pressure of 7.0 GPa and a temperature of 1600°C to obtain a large-sized PCDM blank having a diameter of 20.0 mm and a height of 10.0 mm. The density of the obtained composite was 3.51 grams/cm$^3$.

The wear resistance coefficient of the composite for this example, $K_{wr}$, was 78.1, and the phase composition of the binder was AlCo.

Example 6 (comparative)

The method was implemented similarly to Example 2, with the difference that the plasma treatment of the powders was not performed. The density of the obtained blank could not be obtained above 3.43 grams/cm$^3$, and the wear resistance coefficient for this example, $K_{wr}$, was 55.1, with a phase composition of $AlCo_3C$.

Table 2

| Wear Resistance of the obtained PCDM | | | | | |
|---|---|---|---|---|---|
| Example No. | Density, g/cm$^3$ | Wear Spot Area, mm$^2$ (S) | Mass Removed WC-Co8, grams (m) | Wear Resistance, m/S, (units) | Quality |
| 1 | 3.61 | 0.22 | 23.20 | 105.5 | excellent |
| 2 | 3.58 | 0.23 | 21.95 | 95.4 | excellent |
| 3 | 3.56 | 0.25 | 21.80 | 87.2 | good |
| 4 | 3.49 | 0.27 | 19.50 | 72.2 | good |
| 5 | 3.51 | 0.26 | 20.30 | 78.1 | good |
| 6 | 3.43 | 0.33 | 18.20 | 55.1 | poor |
| PDC - prototype | - | 0.26 | 18.70 | 71.9 | good |

Thus, preliminary plasma activation of the diamond powders' surface makes it possible to synthesize a large-sized composite material blanks with a PCDM, which have a homogeneous composition throughout the entire volume, with the absence of free metal catalysts. The physical and mechanical characteristics (wear resistance coefficient) of this blank are higher than those of the closest prior art.

**Claims**

1.  A method for producing a large-sized blank made of a polycrystalline composite with a diamond matrix (PCDM), comprising:

    - mixing diamond powder of a first fraction with particle size greater than 1 $\mu$m, and diamond powder of a second fraction with particle size less than 1 $\mu$m with aluminum powder and cobalt powder in a liquid inert hydrocarbon-based dispersion medium;
    - evaporating the liquid inert dispersion medium;
    - forming a green blank from the obtained dry mixture by pressing;
    - sintering the green blank using High-Pressure High-Temperature (HPHT) method,
    **characterized in that**
    - a surface of the diamond powder of the first fraction with particle sizes selected from the range of 5 to 40 $\mu$m, and a surface of the diamond powder of the second fraction with particle sizes of 0.05 to 1 $\mu$m previously is activated for 1 to 4 hours with a low-temperature $CCl_2F_2/O_2$ plasma at a power of 50 to 100W;
    - mixing the diamond powder of the first fraction and the diamond powder of the second fraction in weight ratios of 3:1 to 9:1 is carried out for 1 to 3 hours in a bead mill in the hydrocarbon-based liquid inert dispersion medium, with the addition of the aluminum powder with particle sizes of 0.1 to 3 $\mu$m in amount of 2 to 5% by weight of the mixture of the diamond powders, and the cobalt powder with particle sizes of 0.1 to 10 $\mu$m in amount of 1 to 15% by weight of the mixture of the diamond powders, as activators for subsequent sintering and a plasticizer in amount of 0.5 to 1% by weight of the mixture of the diamond powders;
    - evaporating of the liquid inert dispersion medium is carried out in a rotary evaporator at a rotational speed of 5 to 15 revolutions per minute and a temperature of 70 to 80°C;
    - forming the green blank from the obtained dry mixture is performed using a uniaxial press at a pressure of 300 to 700 MPa;
    - sintering the green blank by the HPHT method is conducted to achieve the formation of the large-sized blank made of PCDM which has a homogeneous composition throughout its entire volume.

2.  The method according to claim 1, wherein the surface of the diamond powders is activated with the low-temperature $CCl_2F_2/O_2$ plasma at a power of 50 to 60W for 3 to 4 hours in a rotating container.

3.  The method according to claim 1, wherein before activating the surface of the diamond powders by the low-temperature $CCl_2F_2/O_2$ plasma, the diamond powders are pre-blown with plasma-forming gases Ar, $N_2$, $H_2$, or mixtures thereof.

4.  The method according to claim 1, wherein mixing is carried out in a bead mill with 2 to 3 mm diameter balls and a tumbler both made of tungsten carbide.

**5.** The method according to claim 1 or 3, wherein mixing is carried out in a mixture of hexane and pentane at a weight ratio of the mixture of hexane and pentane to the weight of the mixture of the diamond powders of 5:1 to 2:1.

**6.** The method according to claim 1, wherein paraffin or beeswax is used as the plasticizer during mixing.

**7.** The method according to claim 1, wherein sintering of the green blank is carried out using the HPHT method at a pressure of uniaxial compression range of 5.0 to 9.0 GPa in a temperature range of 500°C to 1700°C for a duration of 10 to 30 minutes.

## Patentansprüche

**1.** Verfahren zur Herstellung eines großformatigen Rohlings aus einem polykristallinen Verbundwerkstoff mit Diamantmatrix (PCDM), umfassend:

- Mischen von Diamantpulver einer ersten Fraktion mit einer Partikelgröße größer als 1 $\mu$m und Diamantpulver einer zweiten Fraktion mit einer Partikelgröße kleiner als 1 $\mu$m mit Aluminiumpulver und Kobaltpulver in einem flüssigen, inerten Dispersionsmedium auf Kohlenwasserstoffbasis;
- Verdampfen des flüssigen, inerten Dispersionsmediums;
- Formen eines Grünlings aus der erhaltenen Trockenmischung durch Pressen;
- Sintern des Grünlings mittels Hochdruck-Hochtemperatur-Verfahren (HPHT),
**dadurch gekennzeichnet, dass**
- eine Oberfläche des Diamantpulvers der ersten Fraktion mit Partikelgrößen im Bereich von 5 bis 40 $\mu$m und eine Oberfläche des Diamantpulvers der zweiten Fraktion mit Partikelgrößen von 0,05 bis 1 $\mu$m zuvor 1 bis 4 Stunden lang mit Niedertemperatur-$CCl_2F_2$/$O_2$-Plasma bei einer Leistung von 50 bis 100 W aktiviert werden;
- Diamantpulver der ersten und zweiten Fraktion in Gewichtsverhältnissen von 3:1 bis 9:1 in einer Kugelmühle 1 bis 3 Stunden lang in einem flüssigen, inerten Dispersionsmedium auf Kohlenwasserstoffbasis vermahlen werden, wobei Aluminiumpulver mit einer Partikelgröße von 0,1 bis 3 $\mu$m in einer Menge von 2 bis 5 Gew.-% der Diamantpulvermischung und Kobaltpulver mit einer Partikelgröße von 0,1 bis 10 $\mu$m in einer Menge von 1 bis 15 Gew.-% der Diamantpulvermischung als Aktivatoren für das anschließende Sintern sowie ein Weichmacher in einer Menge von 0,5 bis 1 Gew.-% der Diamantpulvermischung zugegeben werden;
- das flüssige, inerte Dispersionsmedium in einem Rotationsverdampfer bei einer Drehzahl von 5 bis 15 Umdrehungen pro Minute und einer Temperatur von 70 bis 80 °C verdampft wird;
- die Formgebung des Grünlings aus der erhaltenen Trockenmischung mittels einer uniaxialen Presse bei einem Druck von 300 bis 700 MPa erfolgt;
- das Sintern des Grünlings nach dem HPHT-Verfahren durchgeführt wird, um einen großformatigen Rohling aus PCDM mit homogener Zusammensetzung über sein gesamtes Volumen zu erhalten.

**2.** Verfahren nach Anspruch 1, wobei die Oberfläche der Diamantpulver in einem Rotationsbehälter mit Niedertemperatur-$CCl_2F_2$/$O_2$-Plasma bei einer Leistung von 50 bis 60 W 3 bis 4 Stunden lang aktiviert wird.

**3.** Verfahren nach Anspruch 1, wobei die Diamantpulver vor der Aktivierung ihrer Oberfläche mit dem Niedertemperatur-$CCl_2F_2$/$O_2$-Plasma mit den Plasmagasen Ar, $N_2$, $H_2$ oder deren Gemischen vorgeblasen werden.

**4.** Verfahren nach Anspruch 1, wobei das Mischen in einer Kugelmühle mit Kugeln von 2 bis 3 mm Durchmesser und einem Trommelmischer, beide aus Wolframcarbid, erfolgt.

**5.** Verfahren nach Anspruch 1 oder 3, wobei das Mischen in einem Hexan-Pentan-Gemisch im Gewichtsverhältnis von Hexan-Pentan-Gemisch zu Diamantpulvergemisch von 5:1 bis 2:1 erfolgt.

**6.** Verfahren nach Anspruch 1, wobei Paraffin oder Bienenwachs als Weichmacher beim Mischen verwendet wird.

**7.** Verfahren nach Anspruch 1, wobei das Sintern des Grünlings mittels Hochdruck-Hochtemperatur-Sintern (HPHT) bei einem uniaxialen Kompressionsdruck von 5,0 bis 9,0 GPa und einer Temperatur von 500 °C bis 1700 °C über einen Zeitraum von 10 bis 30 Minuten erfolgt.

**Revendications**

1. Procédé de fabrication d'une ébauche de grande taille en composite polycristallin à matrice de diamant (PCDM), comprenant les étapes suivantes :

   - mélange de poudre de diamant d'une première fraction (granulométrie supérieure à 1 μm) et de poudre de diamant d'une seconde fraction (granulométrie inférieure à 1 μm) avec de la poudre d'aluminium et de la poudre de cobalt dans un milieu de dispersion liquide inerte à base d'hydrocarbures ;
   - évaporation du milieu de dispersion liquide inerte ;
   - formage d'une ébauche crue à partir du mélange sec obtenu par pressage ;
   - frittage de l'ébauche crue par la méthode haute pression haute température (HPHT),

   **caractérisé en ce que** :

   - la surface de la poudre de diamant de la première fraction (granulométrie comprise entre 5 et 40 μm) et la surface de la poudre de diamant de la seconde fraction (granulométrie comprise entre 0,05 et 1 μm) sont préalablement activées pendant 1 à 4 heures par un plasma $CCl_2F_2/O_2$ à basse température, d'une puissance de 50 à 100 W ;
   - le mélange de la poudre de diamant de la première fraction et de la poudre de diamant de la deuxième fraction dans des rapports pondéraux de 3:1 à 9:1 est effectué pendant 1 à 3 heures dans un broyeur à billes dans le milieu de dispersion inerte liquide à base d'hydrocarbures, avec l'ajout de poudre d'aluminium avec des tailles de particules de 0,1 à 3 μm en quantité de 2 à 5 % en poids du mélange de poudres de diamant, et de poudre de cobalt avec des tailles de particules de 0,1 à 10 μm en quantité de 1 à 15 % en poids du mélange de poudres de diamant, comme activateurs pour le frittage ultérieur et comme plastifiant en quantité de 0,5 à 1 % en poids du mélange de poudres de diamant ;
   - l'évaporation du milieu de dispersion inerte liquide est réalisée dans un évaporateur rotatif à une vitesse de rotation de 5 à 15 tours par minute et à une température de 70 à 80 °C;
   - la formation de l'ébauche crue à partir du mélange sec obtenu est réalisée à l'aide d'une presse uniaxiale sous une pression de 300 à 700 MPa ;
   - le frittage de l'ébauche crue par la méthode HPHT est effectué pour obtenir la formation d'une ébauche de grande taille en PCDM présentant une composition homogène dans tout son volume.

2. Procédé selon la revendication 1, dans lequel la surface des poudres de diamant est activée par un plasma $CCl_2F_2/O_2$ à basse température, à une puissance de 50 à 60 W, pendant 3 à 4 heures dans un récipient rotatif.

3. Procédé selon la revendication 1, dans lequel, avant l'activation de la surface des poudres de diamant par le plasma $CCl_2F_2/O_2$ à basse température, les poudres de diamant sont pré-soufflées par des gaz plasmagènes tels qu'Ar, $N_2$, $H_2$ ou leurs mélanges.

4. Procédé selon la revendication 1, dans lequel le mélange est effectué dans un broyeur à billes avec des billes de 2 à 3 mm de diamètre et un tambour de polissage, tous deux en carbure de tungstène.

5. Procédé selon la revendication 1 ou 3, dans lequel le mélange est effectué dans un mélange d'hexane et de pentane, le rapport pondéral de ce mélange à celui du mélange de poudres de diamant étant de 5:1 à 2:1.

6. Procédé selon la revendication 1, dans lequel de la paraffine ou de la cire d'abeille est utilisée comme plastifiant pendant le mélange.

7. Procédé selon la revendication 1, dans lequel le frittage de l'ébauche crue est effectué par le procédé HPHT sous une pression de compression uniaxiale comprise entre 5,0 et 9,0 GPa, à une température comprise entre 500 °C et 1700 °C, pendant une durée de 10 à 30 minutes.

EP 4 541 781 B1

**Fig. 1**

**Fig. 2**

10

| Element | Weight % | Atomic % |
|---|---|---|
| C K | 88.1 | 96.6 |
| AlK | 3.1 | 1.5 |
| CoK | 8.8 | 1.9 |

Selected Area 1

| Element | Weight % | Atomic % |
|---|---|---|
| C K | 99.6 | 99.9 |
| CoK | 0.4 | 0.1 |

EDS Spot 1

| Element | Weight % | Atomic % |
|---|---|---|
| C K | 65.6 | 87.4 |
| O K | 0.6 | 0.7 |
| AlK | 8.1 | 4.9 |
| CoK | 25.7 | 7.0 |

EDS Spot 2

**Fig. 3**

**EP 4 541 781 B1**

**Patent documents cited in the description**

- US 20100285335 A1
- US 20180185987 A
- US 2019061004 A1